# FASCICULE DE BREVET EUROPEEN

(11) **EP 4 562 595 B1**
(45) Date de publication et mention de la délivrance du brevet: **27.05.2026**
(21) Numéro de dépôt: 23776077.2
(22) Date de dépôt: 26.07.2023
(51) Int. Cl.: G06T 7/00

(54) **DISPOSITIF DE SURVEILLANCE D'OPÉRATION INDUSTRIELLE**
ÜBERWACHUNGSVORRICHTUNG FÜR INDUSTRIELLEN BETRIEB
INDUSTRIAL OPERATION MONITORING DEVICE

(30) Priorité: 29.07.2022 FR 2207938
(43) Date de publication de la demande: 04.06.2025
(73) Titulaire: Eramet, 75015 Paris (FR)
(72) Inventeur: BOSZCZUK, Pierre, 75015 Paris (FR)
(74) Mandataire: Cabinet Netter
(86) Numéro de dépôt international: PCT/FR2023/051181
(87) Numéro de publication internationale: WO 2024/023453

(56) Documents cités:
- NAWARATNE RASHMIKA ET AL: "Spatiotemporal Anomaly Detection Using Deep Learning for Real-Time Video Surveillance", IEEE TRANSACTIONS ON INDUSTRIAL INFORMATICS, IEEE SERVICE CENTER, NEW YORK, NY, US, vol. 16, no. 1, 29 August 2019 (2019-08-29), pages 393 - 402, XP011766595, ISSN: 1551-3203, [retrieved on 20200107], DOI: 10.1109/TII.2019.2938527
- HENRIO JORDAN ET AL: "Anomaly Detection in Videos Recorded by Drones in a Surveillance Context", 2018 IEEE INTERNATIONAL CONFERENCE ON SYSTEMS, MAN, AND CYBERNETICS (SMC), IEEE, 7 October 2018 (2018-10-07), pages 2503 - 2508, XP033503032, DOI: 10.1109/SMC.2018.00429

## Description

L'invention concerne le domaine de la surveillance des opérations industrielles.

Par opération industrielle, on entend toute opération sur un site industriel qui a lieu dans un environnement contraint, et dans lequel un nombre fini et connu d'évènements sont censés se produire, définissant une "normalité" de l'opération. Par exemple, cela peut-être un type de convoyage de matière qui présente un calibre, un récipient qui reçoit une matière amenée à fusion ou à très haute température et qui ne doit pas déborder, un système d'injection qui doit se déplacer verticalement sans débattement horizontal, des mâchoires d'un concasseur qui doivent s'emboîter pour réduire la granulométrie des éléments introduits, une zone qui ne doit pas être traversée par des ouvriers pendant l'exécution d'une action, etc. Toute situation hors de la normalité peut être qualifiée "d'incident".

Dans le domaine des opérations industrielles, plusieurs types de contrôles existent pour assurer la sécurité, le bon déroulement ou prévenir un accident lors d'une opération industrielle. Ces contrôles peuvent être humains, automatisés ou semi-automatisés (auquel cas un humain contrôle un paramètre détecté de manière automatisée).

De nombreux incidents matériels et humains pourraient être évités si un contrôle visuel permanent était mis en place. Avec des ressources humaines limitées, un tel contrôle humain est impossible. Les solutions automatisées sont donc les plus souhaitables.

Les solutions d'analyse automatisée de vidéo surveillance sont des technologies éprouvées qui existent depuis les années 1990 et sont utilisées dans l'industrie pour le contrôle de conformité et de qualité. Cependant, les dispositifs automatiques d'inspection visuelle existants nécessitent généralement d'être paramétrés pour ce qui doit être détecté, ou au moins d'avoir des exemples de ce qui doit être détecté. On parle alors d'approche supervisée de la détection d'incident.

Malheureusement, dans de nombreux cas, la nature de l'incident n'est pas bien connue, et souvent même sa cause est inconnue, ou doit être repérée de manière très amont pour pouvoir empêcher l'incident.

La définition de paramètres morphologiques pour détecter les anomalies peut donc s'avérer trop complexe, de même que la recherche d'images d'exemple de ce qui doit être détecté. Les dispositifs de vidéosurveillance classiques sont donc inadaptés pour des incidents dont la nature est a priori difficile à définir. Par exemple, si l'on considère une trémie bouchée à cause de branches, comment configurer un système de vidéo surveillance pour détecter les branches ?

Les recherches de la Demanderesse ont montré que les dispositifs de détection d'anomalies à partir de flux vidéo ne s'appuient que rarement sur une approche non supervisée.

Les progrès dans le domaine de l'analyse d'image via des méthodes d'apprentissage approfondi ("deep learning" en anglais) permettent de caractériser de manière automatique les images et/ou les flux vidéos, qui sont traités comme une suite d'images. C'est par exemple le cas pour certaines machines de tri ou de contrôle de qualité. Mais là encore, ces machines nécessitent un apprentissage de ce qui doit être détecté. De plus, ils nécessitent en général des puissances de calcul importantes, et donc un refroidissement actif des ressources de calculs qui les mettent en œuvre, ce qui est incompatible avec les environnements industriels qui sont très poussiéreux.

Le document Nawaratne Rashmika et al, "Spatiotemporal Anomaly Detection Using Deep Learning for Real-Time Video Surveillance", IEEE Transactions On Industrial Informatics, vol. 16, n. 1, 29 août 2019 (29 août 2019), pages 393-402, décrit un système intelligent de vidéosurveillance en temps réel utilisant l'apprentissage approfondi non supervisé.

Aucun système n'apporte donc une solution satisfaisante à la surveillance automatisée d'opérations industrielles.

L'invention vient améliorer la situation. À cet effet, elle propose de surveillance d'opération industrielle comprenant un carter sensiblement étanche logeant une source d'acquisition d'images et/ou de vidéos et un ordinateur. Ce dispositif est agencé pour déterminer des images de surveillance à partir de la source d'acquisition d'images et/ou de vidéos, l'ordinateur est à refroidissement passif et est agencé pour exécuter une séquence d'apprentissage de normalité d'une scène d'un site d'opération industrielle à surveiller dont les données de sortie sont utilisées par une séquence de surveillance d'opération industrielle. L'ordinateur est agencé, pour une scène donnée d'un site d'opération industrielle à surveiller, pour mettre en œuvre la séquence d'apprentissage de normalité en utilisant un réseau de neurones convolutif pour réseau de neurones à transfert de style pré-entraîné et des images de surveillance tirées de ladite scène donnée et associées à une durée d'acquisition choisie en fonction de l'opération industrielle à surveiller, pour sélectionner comme données de sortie de la séquence d'apprentissage de normalité des matrices de référence tirées de certaines au moins des matrices de Gram d'au moins une couche de convolution dudit réseau de neurones obtenues après le traitement de toutes les images de surveillance associées à la durée d'acquisition choisie. L'ordinateur est agencé, pour une scène donnée d'un site d'opération industrielle à surveiller, pour mettre en œuvre la séquence de surveillance en recevant des images de surveillance obtenues à partir de ladite scène donnée, en les fournissant audit réseau de neurones convolutif, et en retournant une valeur de surveillance indiquant une condition de normalité ou d'anormalité de ladite opération industrielle en fonction du traitement de ces images de surveillance par ledit réseau de neurones convolutifet des données de sortie de la séquence d'apprentissage de normalité.

Ce dispositif est particulièrement avantageux car il permet d'être utilisé dans tout environnement industriel. De plus, il fonctionne de manière non supervisée, ce qui permet de l'utiliser dans de nombreuses situations préalablement ingérables. Enfin, comme c'est la scène du site d'opération industrielle à surveiller qui sert à l'entraînement, il est particulièrement peu coûteux à mettre en œuvre et à configurer, et fonctionne selon le paradigme "initialise le et oublie-le" ("set it and forget it" en anglais).

L'invention est exposée dans le jeu de revendications joint.

Selon divers modes de réalisation, l'invention peut présenter une ou plusieurs des caractéristiques suivantes :
- l'ordinateur est agencé pour mettre en œuvre la séquence de surveillance en récupérant pour chaque image de surveillance les matrices de Gram produites par le réseau de neurones, et pour déterminer la valeur de surveillance en les comparant aux matrices de référence en utilisant une mesure et en comparant le résultat de cette mesure à un seuil de normalité,
- l'ordinateur est agencé, pour une image de surveillance donnée de la séquence de surveillance, pour mettre en œuvre ladite mesure en calculant la différence quadratique entre chaque matrice de Gram de l'image de surveillance donnée récupérée et la matrice de référence à laquelle elle correspond, et
- l'ordinateur est agencé pour mettre en œuvre un réseau de neurones convolutif du type VGG-19, et dans lequel les matrices de Gram sont sélectionnées en sortie de la première couche de convolution.

L'invention concerne également un procédé de surveillance d'opération industrielle sur une scène d'un site d'opération industrielle comprenant les opérations suivantes :
a) recevoir des images de surveillance de ladite scène,
b) mettre en œuvre une séquence d'apprentissage de normalité en utilisant un réseau de neurones convolutif pour réseau de neurones à transfert de style pré-entraîné et des images de surveillance tirées de ladite scène et associées à une durée d'acquisition choisie en fonction de l'opération industrielle à surveiller, et sélectionner comme données de sortie de la séquence d'apprentissage de normalité des matrices de référence tirées de certaines au moins des matrices de Gram d'au moins une couche de convolution dudit réseau de neurones obtenues après le traitement de toutes les images de surveillance associées à la durée d'acquisition choisie,
c) après l'opération b), mettre en œuvre une séquence de surveillance en recevant de nouvelles images de surveillance obtenues à partir de ladite scène et en les fournissant audit réseau de neurones convolutif, et
d) retourner une valeur de surveillance indiquant une condition de normalité ou d'anormalité de ladite opération industrielle en fonction du traitement des nouvelles images de surveillance par ledit réseau de neurones convolutif et de données de sortie de l'opération b).

Selon divers modes de réalisation, l'invention peut présenter une ou plusieurs des caractéristiques suivantes :
- l'opération c) comprend c1) récupérer pour chaque image de surveillance les matrices de Gram produites par le réseau de neurones, et, c2) déterminer la valeur de surveillance en comparant les matrices de l'opération c1) aux matrices de référence en utilisant une mesure, et en comparant le résultat de cette mesure à un seuil de normalité,
- l'opération c2) comprend, pour une image de surveillance donnée de l'opération c1), l'utilisation d'une mesure calculant la différence quadratique entre chaque matrice de Gram de l'image de surveillance donnée récupérée et la matrice de référence à laquelle elle correspond, et
- le réseau de neurones convolutif est du type VGG-19, et dans lequel l'opération b) et c1) sélectionne les matrices de Gram en sortie de la première couche de convolution.

L'invention concerne également un programme informatique comprenant des instructions pour exécuter le procédé selon l'invention, un support de stockage de données sur lequel est enregistré un tel programme informatique et un système informatique comprenant un processeur couplé à une mémoire, la mémoire ayant enregistré un tel programme informatique.

D'autres caractéristiques et avantages de l'invention apparaîtront mieux à la lecture de la description qui suit, tirée d'exemples donnés à titre illustratif et non limitatif, tirés des dessins sur lesquels :
- la figure 1 représente un schéma générique d'un dispositif selon l'invention,
- la figue 2 représente un exemple de boucle de fonctionnement du dispositif de la figure 1,
- la figure 3 représente un exemple de mise en œuvre d'un réseau de neurones utilisé dans le dispositif de la figure 1,
- la figure 4 représente une mise en œuvre de l'invention sur une scène de site d'opération industrielle dans laquelle le transport de minerai sur un tapis est réalisée,
- la figure 5 représente une vue de côté de la figure 4 en l'absence de minerai, et
- la figure 6 représente une mise en œuvre de l'invention sur une scène de site d'opération industrielle dans laquelle un système d'injection d'un réacteur chimique est surveillé.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

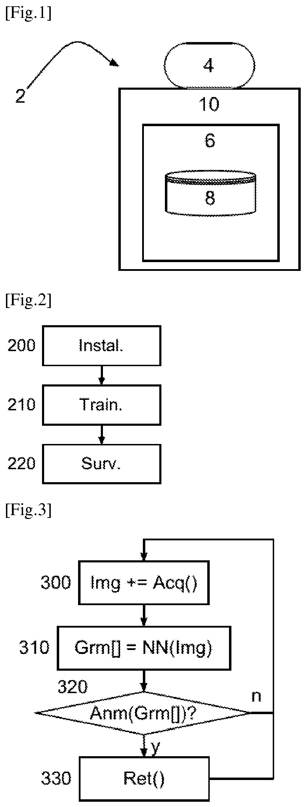

La figure 1 représente un schéma générique d'un dispositif selon l'invention. Le dispositif 2 comprend une source d'acquisition d'images et/ou de vidéo 4 et un ordinateur 6 qui met en œuvre un réseau de neurones 8. La source d'acquisition d'images et/ou de vidéo 4 et l'ordinateur 6 sont logés dans un carter 10 qui est sensiblement étanche.

L'étanchéité du carter 10 permet d'utiliser le dispositif 2 sur un site d'opération industrielle sans s'inquiéter des effets de l'environnement sur son fonctionnement. Compte tenu de cette caractéristique, l'ordinateur 6 est à refroidissement passif. En effet, tout refroidissement actif impliquerait que le carter 10 ne pourrait plus être sensiblement étanche. Cela signifie aussi que l'ordinateur 6 aurait une durée de vie limitée, car il s'encrasserait rapidement. Cela a également des conséquences sur le réseau de neurones 8. En effet, les ordinateurs à refroidissement passif ont une faible puissance de calcul. Dans l'exemple décrit ici, l'ordinateur 6 est un modèle du type Raspberry Pi 4 (marque déposée). En variante, il peut être de tout type dès lors que son refroidissement est passif et permet de l'enfermer de manière sécurisée dans le carter 10. Dans l'exemple décrit, la source d'acquisition d'images et/ou de vidéo 4 comprend une source d'illumination afin d'améliorer la qualité des images et/ou vidéo prises. En variante, cette illumination pourrait être omise, avec un capteur de meilleure qualité. Dans les tests réalisés par la Demanderesse, une webcam du modèle StreamCam de la marque Logitech a été utilisée avec succès.

La mémoire de l'ordinateur 6 peut être tout type de stockage de données propre à recevoir des données numériques : disque dur, disque dur à mémoire flash, mémoire flash sous toute forme, mémoire vive, disque magnétique, stockage distribué localement ou dans le cloud, etc.

Dans l'exemple décrit ici, la mémoire reçoit toutes les données qui concernent le dispositif 2, c'est-à-dire les programmes et logiciels instanciant le réseau de neurones 8, les paramètres et hyperparamètres de ceux-ci, les poids des réseaux de neurones, les sorties et données intermédiaires des réseaux de neurones, les données reçues en entrée, les valeurs et matrices intermédiaires calculées par le réseau de neurones 8, les données stockées en mémoire tampon, ainsi que les données en sortie. Les données calculées par le dispositif peuvent être stockées sur tout type de mémoire similaire à la mémoire, ou sur celle-ci. Ces données peuvent être effacées après que le dispositif a effectué ses tâches ou conservées.

Le réseau de neurones 8 accède directement ou indirectement à la mémoire de l'ordinateur 6. Il peut être réalisé sous la forme d'un code informatique approprié exécuté sur un ou plusieurs processeurs. Par processeurs, il doit être compris tout processeur adapté aux calculs décrits plus bas. Un tel processeur peut être réalisé de toute manière connue, sous la forme d'un microprocesseur pour ordinateur personnel, portable, tablette ou smartphone, d'une puce dédiée de type FPGA ou SoC, d'une ressource de calcul sur une grille ou dans le cloud, d'une grappe de processeurs graphiques (GPUs), d'un microcontrôleur, ou de toute autre forme propre à fournir la puissance de calcul nécessaire à la réalisation décrite plus bas. Un ou plusieurs de ces éléments peuvent également être réalisés sous la forme de circuits électroniques spécialisés tel un ASIC. Une combinaison de processeur et de circuits électroniques peut également être envisagée. Des processeurs dédiés à l'apprentissage automatique pourront aussi être envisagés.

La Demanderesse a découvert une famille de réseaux de neurones qui se prête particulièrement bien à la surveillance d'opération industrielle. Pour cela, au lieu de chercher à détecter des exceptions, et donc à les définir, la Demanderesse a renversé le paradigme. En effet, ce qui caractérise une opération industrielle, c'est la répétition. Dit autrement, quelle que soit le type de surveillance que l'on cherche à réaliser, une opération industrielle va présenter une énorme quantité d'informations quasi identiques et répétitives qui constituent la normalité.

Aussi, au lieu de chercher une exception particulière, il est pertinent de chercher à définir la normalité, et de chercher à détecter tout ce qui n'est pas normal. Cela est d'autant plus adapté à la surveillance d'opérations industrielles que, dans celles-ci, tout ce qui n'est pas prévu, et donc anormal, induit rapidement des problèmes importants. Par conséquent, la Demanderesse a cherché à trouver des réseaux de neurones qui permettent de définir la normalité, et de les utiliser pour réaliser la surveillance d'opérations industrielles.

Ce faisant, elle s'est naturellement tournée vers les réseaux de neurones à apprentissage non supervisés. En effet, ceux-ci nécessitent une base d'observations pour réaliser une séquence d'entraînement, puis sont exploités une fois cette séquence terminée. Dans le cas des opérations industrielles, la Demanderesse a découvert que cela est idéal : en effet, puisque l'idée est de caractériser la normalité, le site d'opération industrielle lui-même fournit une grande base d'observations pour l'entraînement du réseau de neurones à apprentissage non supervisé, à savoir l'opération industrielle elle-même.

À partir de ce moment, la Demanderesse a recherché parmi les réseaux de neurones à apprentissage non supervisé une ou plusieurs familles pouvant être utilisées.

Elle a d'abord pensé aux autoencodeurs. Pour rappel un autoencodeur est un réseau de neurones qui comprend deux portions. Une première portion sert à réduire la dimensionalité des entrées, et est fournie à la deuxième partie dont le rôle est de reproduire l'entrée à partir de sa version à dimensionalité réduite par la première partie. Souvent, les autoencodeurs sont utilisés uniquement pour leur première partie, qui permet de réaliser un "plongement" ("embedding" en anglais) qui permet de représenter une entrée par un vecteur de dimension réduite. Les autoencodeurs peuvent également être utilisés pour détecter des anomalies, puisque la sortie de la deuxième partie est censée être très similaire à celle de l'entrée. Or, si l'entrée ne correspond pas à la base d'entraînement, le plongement va introduire des erreurs et la sortie de la deuxième partie sera différente de l'entrée. L'article de Baur et al. "Deep Autoencoding Models for Unsupervised Anomaly Segmentation in Brain MR Images", arXiv:1804.04488v1, décrit un exemple d'autoencodeur de ce type. Un désavantage des autoencodeurs est la durée d'entraînement, ainsi que des performances inférieures à l'usage.

Elle a également pensé aux réseaux antagonistes génératifs ("Generative Adversarial Networks" ou "GANs" en anglais). Un GAN est un modèle génératif où deux réseaux sont placés en compétition dans un scénario de théorie des jeux. Le premier réseau, le générateur, il génère un échantillon (par exemple une image), tandis que son adversaire, le discriminateur, essaie de détecter si un échantillon est réel ou bien s'il est le résultat du générateur. Ainsi, le générateur est entrainé avec comme but de tromper le discriminateur.

L'apprentissage peut être modélisé comme un jeu à somme nulle. Ce type de réseaux de neurones a été introduit par l'article de Goodfellow etr al. "Generative Adversarial Networks", dans Advances in Neural Information Processing Systems 27, 2014. Cependant, l'apprentissage de ces réseaux est difficile en pratique, avec des problèmes importants de non-convergence.

L'article de Bangalore Ravi et al. "An overview of deep learning based methods for unsupervised and semi-supervised anomaly detection in videos", arXiv:1801.03149v2, décrit d'autres approches de réseaux de neurones à apprentissage non supervisé. Néanmoins, aucune de ces méthodes n'a donné satisfaction dans le cadre contraint de mise en œuvre avec un ordinateur à refroidissement passif, et avec une durée d'entraînement limitée pour éviter que l'opération industrielle ne présente un incident.

En continuant ses recherches, la Demanderesse a eu l'idée d'utiliser de détourner de leur usage traditionnel les réseaux de neurones convolutifs à transfert de style. L'article de Gatys et al. "A Neural Algorithm of Artistic Style", 2015, arXiv:1508.06576, décrit un exemple de mise en œuvre de ce type de réseaux. Ces réseaux de neurones sont connus car ils permettent de mélanger des images en conservant les caractéristiques d'une première image (c'est-à-dire la forme générale), en lui appliquant le style graphique d'une deuxième image (graffiti, pointillisme, couleurs, etc.). La Demanderesse, en observant ces réseaux de neurones, a pensé que les couches de convolutions qu'ils mettent en œuvre pourraient permettre de détecter des caractéristiques de normalité d'une scène d'une opération industrielle, et pourraient donc être utilisées pour définir les caractéristiques de la normalité d'une scène d'opération industrielle.

La Demanderesse a donc commencé à travailler sur les sorties des couches de convolution, et à utiliser les matrices de Gram qui sont produites lorsque des images définissant la normalité sont soumises à un réseau de neurones convolutif à transfert de style déjà entraîné. En continuant ses recherches, la Demanderesse s'est rendu compte que la comparaison des matrices de Gram issues d'images définissant la normalité avec les matrices de Gram calculées en temps réel pour des images de surveillance permet d'obtenir des performances remarquables. De plus, comme le réseau de neurones utilisé est pré-entraîné, la séquence d'apprentissage de normalité a un coût de temps de calcul plus faible que n'importe quel réseau pour lequel l'apprentissage doit être fait entièrement, ce qui rend la solution embarquable sur un ordinateur à refroidissement passible comme l'ordinateur 6. Ainsi, ces réseaux de neurones, dont l'apprentissage est supervisé sont utilisés de manière non supervisée grâce à l'utilisation non pas de leur sortie mais d'une partie de leurs couches internes.

Dans l'exemple décrit ici, le réseau de neurones 8 est un réseau de neurones du type VGG-19, de la famille de réseaux de neurones VGG dont les principes sont décrits dans l'article de Simonyan et al. "Very Deep Convolutional Networks for Large-Scale Image Recognition", arXiv:1409.1556. En variante, d'autres réseaux de neurones convolutifs pourraient être utilisés, comme un autre réseau de la famille VGG (VGG-16 par exemple), ou encore un réseau de neurones convolutif de la famille ResNext, MobileNet, etc.

La Demanderesse a par ailleurs découvert qu'il est particulièrement avantageux de se baser sur les matrices de Gram issues de la première couche de convolution. En variante, les matrices de Gram pourraient être tirées d'une autre couche de convolution, ou de plusieurs couches de convolution.

La figure 2 représente un exemple de boucle de fonctionnement du dispositif 2.

Dans une première opération 200, le dispositif 2 est installé sur le site de la scène d'opération industrielle à surveiller. Cette opération a pour but le placement optimal du dispositif 2 par rapport à la scène, ainsi que le paramétrage de l'entraînement. Le focus de l'image de la source d'acquisition 4 et sa sensibilité sont les facteurs principaux à prendre en compte pour sa disposition dans la scène d'opération industrielle à surveiller. Le paramétrage de l'entraînement présent dans l'exemple décrit ici deux composantes principales : la durée et la tolérance. Ces paramètres seront décrits plus avant avec l'opération de séquence d'apprentissage de la normalité.

Ensuite, dans une opération 210, la séquence d'apprentissage de la normalité est réalisée. Dans cette opération, la source d'acquisition 4 acquiert des images et/ou une vidéo qui sont transmises à l'ordinateur 6. Les données ainsi acquises sont transformées en données de surveillance propres à être traitées par le réseau de neurones 8. Cela signifie que les données sont normalisées, par exemple par adaptation de leur résolution ou encore par transformation d'une vidéo en une suite d'images, pour l'entrée du réseau de neurones 8. Cette opération de normalisation peut être réalisée par la source 4 elle-même ou par l'ordinateur 6. Les données de surveillance ainsi produites sont fournies au réseau de neurones 8 qui les traite. L'ordinateur 6 récupère alors les matrices de Gram issues de la première couche de convolution du réseau de neurones 8. Ces matrices de Gram peuvent alors être stockées en tant que matrices de référence pour la séquence de surveillance. En variante, ces matrices de Gram peuvent être comparées entre elles de sorte que le nombre de matrice de référence soit limité.

Comme on l'a vu plus haut, l'opération 210 est paramétrée par deux composantes. La durée de l'opération 210 est liée à l'opération industrielle qui doit être surveillée. En effet, plus la durée est longue, et plus le réseau de neurones 8 possèdera de données pour son entraînement. Cela produira donc plus de matrices de Gram qui pourront être utilisées dans la séquence de surveillance pour déterminer les incidents. Néanmoins, l'augmentation du nombre de matrices de Gram augmente le temps de calcul lors de la séquence de surveillance, et donc le nombre d'images qui peuvent être traitées chaque seconde par l'ordinateur 6 à refroidissement passif. De plus, plus la durée est longue, et plus le risque de survenance d'un incident est important, ce qui risquerait de produire des matrices de Gram non représentatives de la normalité. La tolérance est un paramètre qui vient compléter la durée pour garantir la capacité à traiter un nombre donné d'images par seconde lors de la séquence de surveillance. Ainsi, la tolérance peut définir directement ou indirectement un nombre de matrices de Gram retenues après la séquence d'apprentissage de normalité, par exemple en choisissant les matrices les plus proches les unes des autres, ce qui permet de définir la version la plus "précise" de la normalité. En variante, le paramètre de tolérance peut être utilisé pour arrêter la séquence d'apprentissage de la normalité, dès qu'il existe un nombre minimum de matrices de Gram dont la distance entre elles satisfait le paramètre de tolérance. Dans ces deux cas, la distance peut être basée sur une mesure, par exemple la moyenne de la somme des différences quadratique terme à terme entre les matrices de Gram, ou une autre mesure.

Une fois la séquence d'apprentissage de la normalité exécutée, le dispositif 2 utilise ses données de sortie pour mettre en œuvre la séquence de surveillance dans une opération 220. Bien qu'il soit fait ici référence à une unique séquence de surveillance, plusieurs séquences de surveillance peuvent être réalisées à partir d'une unique séquence d'apprentissage de la normalité. La séquence d'apprentissage de la normalité pourra être optionnellement réitérée si une ou plusieurs séquences de surveillance génèrent des faux positifs, ce qui pourrait par exemple être le cas si l'opération industrielle a changé, ou encore selon une périodicité choisie.

La figure 3 représente un exemple de mise en œuvre de l'opération 220. L'opération 220 est vue comme une boucle, qui se termine lorsque l'opérateur du dispositif 2 décide d'arrêter la séquence de surveillance.

Dans une première opération 300, une image de surveillance Img est obtenue au moyen d'une fonction Acq(). Comme expliqué plus haut, les images de surveillance peuvent être générées par la source d'acquisition 4 ou par l'ordinateur 6.

Ensuite, dans une opération 310, l'image de surveillance Img est envoyée au réseau de neurones 8, et une fonction NN() récupère les matrices de Gram qui correspondent aux matrices de référence, puis elles sont stockées dans un tableau Grm[].

Le tableau Grm[] est alors testé dans une fonction Anm() exécutée dans une opération 320 afin de déterminer si l'image Img contient une anomalie ou pas. Pour cela, la différence quadratique entre chaque matrice de Gram du tableau Grm[] et la matrice de référence à laquelle elle correspond est calculée, ce qui peut être résumer par la formule *m* = Σ*_{i,j}*(*G_{i,j}* - *A_{i,j}*)² où m est le score de normalité de l'image Img, Les G_{i,j} sont les matrices de Gram obtenues pour l'image Img, et les A_{i,j} sont les matrices de référence. La fonction Anm() détermine si le score m dépasse un seuil choisi. Si c'est le cas, alors une fonction Ret() est exécutée dans une opération 330 et retourne d'une part un indicateur que l'image Img présente un incident, et d'autre part un emplacement de l'image correspondant à l'incident détecté. Cet emplacement peut par exemple être déterminé en regardant quels termes de la matrice ont la plus grande différence (par exemple le dernier quartile des différences), en revenant à la l'ensemble de neurones de la couche de convolution dont sont issus ces termes, et en remontant aux pixels de l'image qui ont alimenté ces neurones. Enfin, ou lorsque le test de l'opération 320 est négatif, la boucle reprend avec l'opération 300 pour traiter l'image suivante.

Dans l'état actuel, la Demanderesse obtient un taux d'environ 4 images traitées par seconde, ce qui est déjà très performant pour l'application à la surveillance d'opération industrielle compte tenu de la fiabilité atteinte.

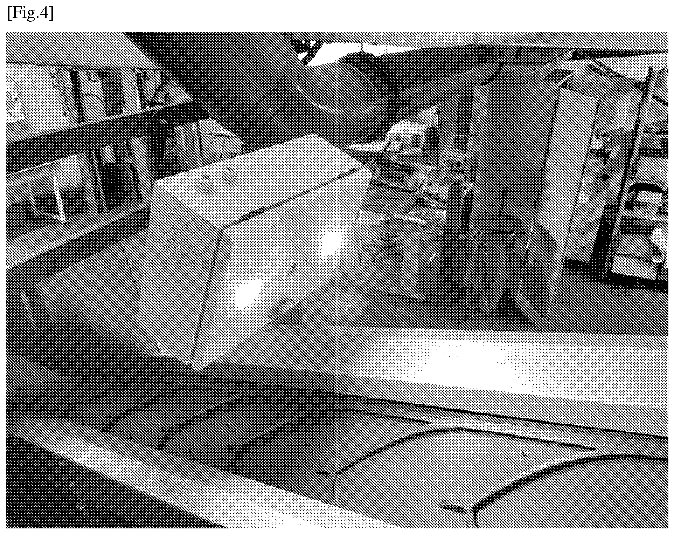

Les figures 4 à 6 montrent plusieurs mises en œuvre pratiques que la Demanderesse a testées pour valider la pertinence du dispositif 2.

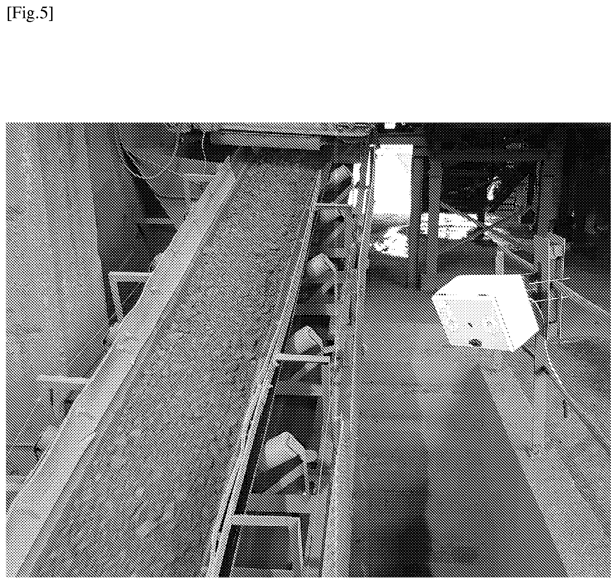

Dans l'exemple représenté sur la figure 4, la scène est un convoyeur de minerai, et le dispositif 2 sert à détecter des morceaux trop gros par rapport à la taille moyenne des minerais. Ce type de morceaux est susceptible de bloquer les éléments en aval dans la chaîne de traitement et d'entraîner des arrêts de ligne de plusieurs heures. Ainsi, le dispositif 2 est placé juste au-dessus du convoyeur et filme ce dernier. Cette mise en œuvre a été testée avec succès, et l'introduction de morceaux étrangers de nature à causer un incident est représenté sur la figure 5.

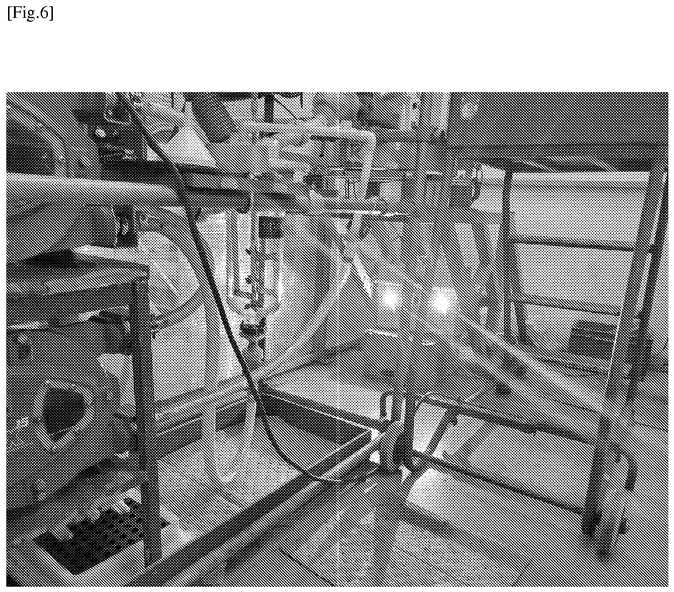

Dans l'exemple représenté sur la figure 6, la scène concerne un système d'injection d'un réacteur chimique. Lorsque le système vibre, cela est associé à un incident important de cette opération, susceptible d'aboutir à des problèmes.

Dans une autre situation non représentée, la scène concerne un concasseur à mâchoires en métal. Ici encore, des morceaux trop importants peuvent entraîner le blocage des mâchoires et donc un arrêt de chaîne. En plaçant le dispositif 2 sensiblement au-dessus du concasseur, il devient possible de surveiller ce dernier.

Encore une autre application est la surveillance de présence. En effet, certains sites ne doivent pas être traversés par des opérateurs lors du fonctionnement d'une opération industrielle. Le dispositif 2 permet là encore de détecter la présence indésirée de personnel. Dans encore une autre application, le dispositif 2 a été utilisé pour valider la forme et la taille de briquettes.

Ces divers cas montrent la polyvalence du dispositif 2, qui ne nécessite aucune adaptation à chaque scène sinon son installation et la définition d'une durée de la séquence d'apprentissage de la normalité. Ainsi, le dispositif 2 est particulièrement adapté aux opérations industrielles des domaines du traitement du minerai et de la métallurgie.

## Revendications

1. Dispositif de surveillance d'opération industrielle comprenant un carter (10) sensiblement étanche logeant une source d'acquisition d'images et/ou de vidéos (4) et un ordinateur (6), **caractérisé en ce que**
- le dispositif (2) est agencé pour déterminer des images de surveillance à partir de la source d'acquisition d'images et/ou de vidéos (4),
- l'ordinateur (6) est à refroidissement passif et est agencé pour exécuter une séquence d'apprentissage de normalité d'une scène d'un site d'opération industrielle à surveiller dont les données de sortie sont utilisées par une séquence de surveillance d'opération industrielle,
- l'ordinateur (6) est agencé, pour une scène donnée d'un site d'opération industrielle à surveiller, pour mettre en œuvre la séquence d'apprentissage de normalité en utilisant un réseau de neurones convolutif (8) pour réseau de neurones à transfert de style pré-entraîné et des images de surveillance tirées de ladite scène donnée et associées à une durée d'acquisition choisie en fonction de l'opération industrielle à surveiller, pour sélectionner comme données de sortie de la séquence d'apprentissage de normalité des matrices de référence tirées de certaines au moins des matrices de Gram d'au moins une couche de convolution dudit réseau de neurones (8) obtenues après le traitement de toutes les images de surveillance associées à la durée d'acquisition choisie, et
- l'ordinateur (6) est agencé, pour une scène donnée d'un site d'opération industrielle à surveiller, pour mettre en œuvre la séquence de surveillance
* en recevant des images de surveillance obtenues à partir de ladite scène donnée, en les fournissant audit réseau de neurones convolutif (8),
* en récupérant pour chaque image de surveillance les matrices de Gram produites par le réseau de neurones (8), et
* en retournant une valeur de surveillance indiquant une condition de normalité ou d'anormalité de ladite opération industrielle en fonction du traitement de ces images de surveillance par ledit réseau de neurones convolutif (8) et des données de sortie de la séquence d'apprentissage de normalité, la valeur de surveillance étant déterminée en comparant les matrices de Gram produites par le réseau de neurones (8) aux matrices de référence en utilisant une mesure et en comparant le résultat de cette mesure à un seuil de normalité.

2. Dispositif selon la revendication 1, dans lequel l'ordinateur (6) est agencé, pour une image de surveillance donnée de la séquence de surveillance, pour mettre en œuvre ladite mesure en calculant la différence quadratique entre chaque matrice de Gram de l'image de surveillance donnée récupérée et la matrice de référence à laquelle elle correspond.

3. Dispositif selon l'une des revendications précédentes, dans lequel l'ordinateur (6) est agencé pour mettre en œuvre un réseau de neurones convolutif du type VGG-19, et dans lequel les matrices de Gram sont sélectionnées en sortie de la première couche de convolution.

4. Procédé mise en œuvre par ordinateur de surveillance d'opération industrielle sur une scène d'un site d'opération industrielle comprenant les opérations suivantes :
a) recevoir des images de surveillance de ladite scène,
b) mettre en œuvre une séquence d'apprentissage de normalité en utilisant un réseau de neurones convolutif (8) pour réseau de neurones à transfert de style pré-entraîné et des images de surveillance tirées de ladite scène et associées à une durée d'acquisition choisie en fonction de l'opération industrielle à surveiller, et sélectionner comme données de sortie de la séquence d'apprentissage de normalité des matrices de référence tirées de certaines au moins des matrices de Gram d'au moins une couche de convolution dudit réseau de neurones (8) obtenues après le traitement de toutes les images de surveillance associées à la durée d'acquisition choisie,
c) après l'opération b), mettre en œuvre une séquence de surveillance
c0) en recevant de nouvelles images de surveillance obtenues à partir de ladite scène, en les fournissant audit réseau de neurones convolutif (8),
c1) en récupérant pour chaque image de surveillance les matrices de Gram produites par le réseau de neurones (8), et,
c2) en déterminant une valeur de surveillance indiquant une condition de normalité ou d'anormalité de ladite opération industrielle en fonction du traitement des nouvelles images de surveillance par ledit réseau de neurones convolutif (8) et de données de sortie de l'opération b), la valeur de surveillance étant déterminée en comparant les matrices de l'opération c1) aux matrices de référence de l'opération b) en utilisant une mesure, et en comparant le résultat de cette mesure à un seuil de normalité, et
d) retourner la valeur de surveillance.

5. Procédé selon la revendication 4, dans lequel l'opération c2) comprend, pour une image de surveillance donnée de l'opération c1), l'utilisation d'une mesure calculant la différence quadratique entre chaque matrice de Gram de l'image de surveillance donnée récupérée et la matrice de référence à laquelle elle correspond.

6. Procédé selon la revendication 4 ou 5, dans lequel le réseau de neurones convolutif est du type VGG-19, et dans lequel l'opération b) et c1) sélectionne les matrices de Gram en sortie de la première couche de convolution.

7. Programme informatique comprenant des instructions pour exécuter le procédé selon l'une des revendications 4 à 6 lorsqu'il est exécuté sur un ordinateur.

8. Support de stockage de données sur lequel est enregistré le programme informatique selon la revendication 7.

## Patentansprüche

1. Vorrichtung zur Überwachung eines Industriebetriebs, umfassend ein im Wesentlichen dichtes Gehäuse (10), das eine Bild- und/oder Videoerfassungsquelle (4) aufnimmt, und einen Computer (6), **dadurch gekennzeichnet, dass**
- die Vorrichtung (2) so eingerichtet ist, dass sie auf Grundlage der Bild- und/oder Videoerfassungsquelle (4) Überwachungsbilder bestimmt,
- der Computer (6) passiv gekühlt wird und so eingerichtet ist, dass er eine Normalitätslernsequenz für einen Schauplatz eines zu überwachenden Industriebetriebsstandorts ausführt, deren Ausgangsdaten von einer Industriebetriebs-Überwachungssequenz verwendet werden,
- der Computer (6) so eingerichtet ist, dass er für einen gegebenen Schauplatz eines zu überwachenden Industriebetriebsstandorts die Normalitätslernsequenz implementiert, und zwar unter Verwendung eines neuronalen Faltungsnetzwerks (8) für ein vortrainiertes neuronales Stiltransfernetzwerk und unter Verwendung von Überwachungsbildern, die aus dem gegebenen Schauplatz gewonnen und einer in Abhängigkeit vom zu überwachenden Industriebetrieb gewählten Erfassungsdauer zugeordnet werden, um als Ausgangsdaten der Normalitätslernsequenz Referenzmatrizen auszuwählen, die aus mindestens einigen der Gram-Matrizen mindestens einer Faltungsschicht des neuronalen Netzwerks (8) gewonnen wurden, welche nach der Verarbeitung aller der gewählten Erfassungsdauer zugeordneten Überwachungsbilder erhalten wurden, und
- der Computer (6) so eingerichtet ist, dass er für einen gegebenen Schauplatz eines zu überwachenden Industriebetriebsstandorts die Überwachungssequenz implementiert
* durch Empfangen von Überwachungsbildern, die auf Grundlage des gegebenen Schauplatzes erhalten wurden, durch Bereitstellen derselben an das neuronale Faltungsnetzwerk (8),
* durch Sammeln, für jedes Überwachungsbild, der von dem neuronalen Netzwerk (8) erzeugten Gram-Matrizen, und
* durch Zurückgeben eines Überwachungswerts, der einen Normalitäts- oder Anormalitätszustand des Industriebetriebs in Abhängigkeit von der Verarbeitung dieser Überwachungsbilder durch das neuronale Faltungsnetzwerk (8) und der Ausgangsdaten der Normalitätslernsequenz angibt, wobei der Überwachungswert durch Vergleichen der von dem neuronalen Netzwerk (8) erzeugten Gram-Matrizen mit den Referenzmatrizen unter Verwendung einer Messung und durch Vergleichen des Ergebnisses dieser Messung mit einer Normalitätsschwelle bestimmt wird.

2. Vorrichtung nach Anspruch 1, wobei der Computer (6) so eingerichtet ist, dass er für ein gegebenes Überwachungsbild der Überwachungssequenz die Messung durch Berechnen der quadratischen Differenz zwischen jeder Gram-Matrix des gesammelten gegebenen Überwachungsbildes und der Referenzmatrix, der sie entspricht, implementiert.

3. Vorrichtung nach einem der vorstehenden Ansprüche, wobei der Computer (6) so eingerichtet ist, dass er ein neuronales Faltungsnetzwerk vom Typ VGG-19 implementiert, und wobei die Gram-Matrizen am Ausgang der ersten Faltungsschicht ausgewählt werden.

4. Computerimplementiertes Verfahren zur Überwachung von Industriebetrieben auf einem Schauplatz eines Industriebetriebsstandorts, das die folgenden Vorgänge umfasst:
a) Empfangen von Überwachungsbildern des Schauplatzes,
b) Implementieren einer Normalitätslernsequenz unter Verwendung eines neuronalen Faltungsnetzwerks (8) für ein vortrainiertes neuronales Stiltransfernetzwerk und unter Verwendung von Überwachungsbildern, die aus dem Schauplatz gewonnenen und einer in Abhängigkeit vom zu überwachenden Industriebetrieb gewählten Erfassungsdauer zugeordnet werden, zum Auswählen, als Ausgangsdaten der Normalitätslernsequenz, von Referenzmatrizen, die von mindestens einigen der Gram-Matrizen mindestens einer Faltungsschicht des neuronalen Netzwerks (8) gewonnen wurden, welche nach der Verarbeitung aller Überwachungsbilder, die der gewählten Erfassungsdauer zugeordnet sind, erhalten wurden,
c) nach Vorgang b), Implementieren eine Überwachungssequenz
c0) durch Empfangen von neuen Überwachungsbildern, die auf Grundlage des Schauplatzes erhalten wurden, durch Bereitstellen derselben an das neuronale Faltungsnetzwerk (8),
c1) durch Sammeln, für jedes Überwachungsbild, der von dem neuronalen Netzwerk (8) erzeugten Gram-Matrizen, und
c2) durch Bestimmen eines Überwachungswerts, der einen Normalitäts- oder Anormalitätszustand des Industriebetriebs in Abhängigkeit von der Verarbeitung der neuen Überwachungsbilder durch das neuronale Faltungsnetzwerk (8) und von Ausgangsdaten des Vorgangs b) angibt, wobei der Überwachungswert durch Vergleichen der Matrizen aus dem Vorgang c1) mit den Referenzmatrizen aus dem Vorgang b) unter Verwendung einer Messung und durch Vergleichen des Ergebnisses dieser Messung mit einer Normalitätsschwelle bestimmt wird, und
d) Zurückgeben des Überwachungswertes.

5. Verfahren nach Anspruch 4, wobei der Vorgang c2) für ein gegebenes Überwachungsbild aus dem Vorgang c1) das Verwenden einer Messung umfasst, die die quadratische Differenz zwischen jeder Gram-Matrix des gesammelten Überwachungsbildes und der Referenzmatrix, der sie entspricht, berechnet.

6. Verfahren nach Anspruch 4 oder 5, wobei das neuronale Faltungsnetzwerk vom Typ VGG-19 ist, und wobei der Vorgang b) und c1) die Gram-Matrizen am Ausgang der ersten Faltungsschicht auswählt.

7. Informatikprogramm, das Anweisungen zum Ausführen des Verfahrens nach einem der Ansprüche 4 bis 6 umfasst, wenn es auf einem Computer ausgeführt wird.

8. Datenspeicherträger, auf dem das Informatikprogramm nach Anspruch 7 gespeichert ist.

## Claims

1. Industrial operation monitoring device comprising a substantially sealed casing (10) housing an image and/or video acquisition source (4) and a computer (6), **characterised in that**
- the device (2) is arranged to determine monitoring images from the image and/or video acquisition source (4),
- the computer (6) is passively cooled and is arranged to execute a sequence for learning the normal state of a scene of an industrial operation site to be monitored, whose output data are used by a sequence for monitoring industrial operations,
- the computer (6) is arranged, for a given scene of an industrial operation site to be monitored, to implement the normal state learning sequence by using a convolutional neural network (8) for pre-trained style transfer neural network and monitoring images derived from said given scene and associated with an acquisition duration selected according to the industrial operation to be monitored, to select as output data of the normal state learning sequence reference matrices derived from some at least of the Gram matrices of at least one convolution layer of said neural network (8) obtained after processing all the monitoring images associated with the selected acquisition duration, and
- the computer (6) is arranged, for a given scene of an industrial operation site to be monitored, to implement the monitoring sequence
* by receiving monitoring images obtained from said given scene, by supplying them to said convolutional neural network (8),
* by retrieving for each monitoring image the Gram matrices produced by the neural network (8), and
* by returning a monitoring value indicating a normal or abnormal state of said industrial operation according to the processing of these monitoring images by said convolutional neural network (8) and the output data of the normal state learning sequence, the monitoring value being determined by comparing the Gram matrices produced by the neural network (8) with the reference matrices by using a measurement and comparing the result of that measurement with a normality threshold.

2. Device according to claim 1, wherein the computer (6) is arranged, for a given monitoring image of the monitoring sequence, to implement said measurement by calculating the quadratic difference between each Gram matrix of the retrieved given monitoring image and the reference matrix to which it corresponds.

3. Device according to any one of the preceding claims, wherein the computer (6) is arranged to implement a convolutional neural network of the VGG-19 type, and wherein the Gram matrices are selected at the output of the first convolution layer.

4. Computer-implemented method for monitoring industrial operation on a scene of an industrial operation site comprising the following operations:
a) receiving monitoring images of said scene,
b) implementing a normal state learning sequence using a convolutional neural network (8) for pre-trained style transfer neural network and monitoring images derived from said scene and associated with an acquisition duration selected according to the industrial operation to be monitored, and selecting as output data of the normal state learning sequence reference matrices derived from some at least of the Gram matrices of at least one convolution layer of said neural network (8) obtained after processing all the monitoring images associated with the selected acquisition duration,
c) after the operation b), implementing a monitoring sequence
c0) by receiving new monitoring images obtained from said scene, supplying them to said convolutional neural network (8),
c1) by retrieving for each monitoring image the Gram matrices produced by the neural network (8), and,
c2) by determining a monitoring value indicating a normal or abnormal state of said industrial operation according to the processing of the new monitoring images by said convolutional neural network (8) and output data from operation b), the monitoring value being determined by comparing the matrices of operation c1) with the reference matrices of operation b) using a measurement, and comparing the result of this measurement to a normality threshold, and
d) returning the monitoring value.

5. Method according to claim 4, wherein operation c2) comprises, for a given monitoring image of operation c1), using a measurement calculating the quadratic difference between each Gram matrix of the retrieved given monitoring image and the reference matrix to which it corresponds.

6. Method according to claim 4 or 5, wherein the convolutional neural network is of the VGG-19 type, and wherein operation b) and c1) selects the Gram matrices at the output of the first convolution layer.

7. Computer program comprising instructions for executing the method according to any one of claims 4 to 6 when executed on a computer.

8. Data storage medium on which the computer program according to claim 7 is recorded.
